# EUROPÄISCHE PATENTSCHRIFT

(11) **EP 1 710 454 B1**
(45) Veröffentlichungstag und Bekanntmachung des Hinweises auf die Patenterteilung: **05.09.2007**
(21) Anmeldenummer: 06005272.7
(22) Anmeldetag: 15.03.2006
(51) Int. Cl.: F16B 29/00

(54) **Blindniet**
Blind rivet
Rivet aveugle

(30) Priorität: 07.04.2005 DE 202005005536 U
(43) Veröffentlichungstag der Anmeldung: 11.10.2006
(73) Patentinhaber: Böllhoff Verbindungstechnik GmbH, 33649 Bielefeld (DE)
(72) Erfinder: Süssenbach, Rainer, 33803 Steinhagen (DE)
(74) Vertreter: Hauck Patent- und Rechtsanwälte

(56) Entgegenhaltungen:
- DE-A1- 2 605 658
- GB-A- 1 368 924
- US-A- 2 409 352
- US-A- 3 304 830
- US-A- 3 489 312
- US-A1- 2004 179 920

## Beschreibung

Die vorliegende Erfindung betrifft einen Blindniet für eine Schraubverbindung zwischen einem Trägerteil und einem Befestigungsteil.

Aus DE-GM 90 01 069.8 ist eine Blindnietmutter bekannt, die aus einem elastischen Außenkörper und einem metallischen Gewindeeinsatz besteht. Der elastische Außenkörper hat einen in ein Befestigungsloch des Trägerteils einsteckbaren hülsenförmigen Schaft mit einem Befestigungsflansch und einer Faltzone, die zu einem einen Schließkopf bildenden Stauchwulst faltbar ist, so dass die Blindnietmutter einerseits durch den Befestigungsflansch und andererseits durch den Stauchwulst an dem Befestigungsteil festgelegt wird. Bei der vorbekannten Blindnietmutter ist die Gewindebuchse in ein Gewindeelement und eine Abstandshülse unterteilt, wobei sich die Abstandshülse am Ende des Faltvorganges an die Unterseite des Befestigungsteiles anlegt. Es sind auch Ausführungsformen bekannt, bei denen die Gewindebuchse einstückig ausgebildet ist.

In jedem Fall wird die für den Faltvorgang erforderliche Axialkraft von der Befestigungsschraube über die metallische Gewindebuchse unmittelbar auf das Befestigungsteil abgeleitet, ohne dass der Stauchwulst letztendlich die Axialkraft aufnehmen muss. Dennoch unterliegt die vorbekannte Blindnietmutter gewissen Festigkeitsbeschränkungen. Soll die Blindnietmutter beispielsweise für eine Schraubverbindung mit einer hochfesten Schraube der Festigkeitsklasse von mehr als 8.8 (gemäß DIN -JSO 898 Teil 1) ausgelegt werden, so besteht die Gefahr von unzulässigen Verwindungen des elastischen Außenkörpers und einer zu hohen Flächenpressung zwischen der Stirnseite der Gewindebuchse und der Unterseite des Befestigungsteils.

Ein Blindniet nach dem Oberbegriff des Patentanspruchs 1 ist aus DE 26 05 658 A1 und GB 1 368 924 A bekannt.

Der vorliegenden Erfindung liegt die Aufgabe zugrunde, einen Blindniet, insbesondere Blindnietmutter, für eine Schraubverbindung zu schaffen, bei der trotz hoher mechanischer Belastbarkeit der Schraubverbindung unzulässige Verwindungen des elastischen Außenkörpers vermieden werden.

Diese Aufgabe wird durch den in Anspruch 1 definierten Blindniet gelöst.

Erfindungsgemäß wird der Außenkörper durch Umspritzen der Buchse in einem Spritzgießverfahren hergestellt. Die Buchse hat einen Verankerungsabschnitt mit einem ringförmigen Einstich, der von einem Verankerungsvorsprung des Außenkörpers ausgefüllt ist, um eine formschlüssige Verbindung zwischen der Gewindebuchse und dem Außenkörper zu bilden. Der Einstich wird von eine in Mitnahmeflansch begrenzt. Hierdurch können die für den Faltvorgang erforderlichen hohen Axialkräfte problemlos von der Befestigungsschraube über die Buchse auf den Außenkörper übertragen werden.

Vorzugsweise weist die Verdrehsicherung ineinandergreifende Längsrändel des Außenkörpers und der Buchse im Bereich der Faltzone auf. Wenn während des Faltvorganges ein Abstützabschnitt der Buchse eine Längsverschiebung relativ zu dem Außenkörper ausführt, schneiden die Längsrändel der Buchse entsprechende Längsrändel in das Material des Außenkörpers. Zweckmäßigerweise sind die Längsrändel des Außenkörpers im Bereich der Faltzone so ausgebildet, dass beim Falten des Stauchwulstes die im Inneren des Stauchwulstes gegenüberliegenden Längsrändel ineinander gedrückt werden. Hierdurch wird während des gesamten Faltvorganges und auch danach der Außenkörper gegen Drehungen relativ zur Buchse gesichert.

Als weitere Möglichkeit weist die Verdrehsicherung Längsverstärkungen des Außenkörpers auf, die durch Abflachungen an der Außenseite des Schaftes des Außenkörpers im Bereich der Faltzone gebildet werden. Dies trägt zur Erhöhung der Verwindungssteifigkeit des Außenkörpers bei.

Die Verdrehsicherung kann ferner radial verlaufende Rippen und Vertiefungen an einer Seitenwand einer Ringnut des Außenkörpers aufweisen, gegen welche der Stauchwulst beim Faltvorgang angedrückt wird.

Vorzugsweise hat der Außenkörper im Bereich zwischen seinem Befestigungsflansch und der Faltzone einen Ringbund, an dem über den Umfang verteilte Noppen zum Festklemmen des Außenkörpers im Befestigungsloch des Trägerteils vorgesehen sind.

Durch die oben beschriebenen Maßnahmen wird der Blindniet schon zu Beginn des Faltvorganges wie auch während und nach dem Faltvorgang an einem Mitdrehen und Verwinden gehindert. Dies erlaubt es, den Blindniet für eine Schraubverbindung mit einer hochfesten Schraube beispielsweise der Festigkeitsklasse von mehr als 8.8 auszulegen. Hierbei lässt sich die Flächenpressung zwischen dem Befestigungsteil und der daran anliegenden Stirnseite der Buchse auf zulässige Werte festlegen. Ferner werden hierdurch die mechanischen Eigenschaften des Blindniets hinsichtlich Zug- und Scherlast deutlich verbessert.

Vorzugsweise hat der Befestigungsflansch des Außenkörpers an seiner mit dem Trägerteil zusammenwirkenden Auflagefläche tragende und nicht tragende Anteile, beispielsweise in Form von Vorsprüngen und Vertiefungen. Der auf diese Weise ausgelegte Befestigungsflansch und der Stauchwulst, die an gegenüberliegenden Seiten des Trägerteils abgestützt sind, ermöglichen somit schwingungsentkoppelnde Ausgleichsbewegungen in Verbindung mit entsprechender Geräuschdämpfung, bedingt durch die Verformbarkeit des Befestigungsflansches und der verbleibenden Verformbarkeit des Stauchwulstes.

Der Außenkörper besteht vorzugsweise aus einem thermoplastischen Elastomer auf Polyesterbasis oder einem vernetzten Elastomer mit guter Chemikalienbeständigkeit (Dieselölbeständigkeit) und Wärmeformbeständigkeit (bis z. B. 150°C). Das Elastomer ist vorzugsweise ein Polybutylenterephthalat (PBT) oder Polyethylenterephthalat (PET). Die Buchse besteht vorzugsweise aus Messing, wenngleich sie auch aus einem anderen Material wie z. B. Stahl oder einer Aluminiumlegierung bestehen könnte.

Weitere vorteilhafte Ausgestaltungen und Weiterbildungen der Erfindung ergeben sich aus den Unteransprüchen.

Anhand der Zeichnungen wird ein bevorzugtes Ausführungsbeispiel der Erfindung näher erläutert. Es zeigt:
Fig. 1 einen Längsschnitt eines erfindungsgemäß ausgebildeten Blindniets in Form einer Blindnietmutter in einer strichpunktiert angedeuteten Schraubverbindung, wobei die Blindnietmutter auf der linken Seite vor dem Faltvorgang und auf der rechten Seite nach dem Faltvorgang dargestellt ist;
Fig. 2 eine Seitenansicht der Blindnietmutter in Fig. 1 in verkleinertem Maßstab;
Fig. 3 eine perspektivische Ansicht der Blindnietmutter der Fig. 2 von unten;
Fig. 4 einen Längsschnitt durch die Blindnietmutter der Fig. 1, wobei auf der linken Seite der Außenkörper der Blindnietmutter ohne die Gewindebuchse und auf der rechten Seite der Außenkörper zusammen mit der Gewindebuchse dargestellt sind;
Figuren 5, 6 Schnittansichten in Richtung der Pfeile V-V bzw. VI-VI in Fig. 4.

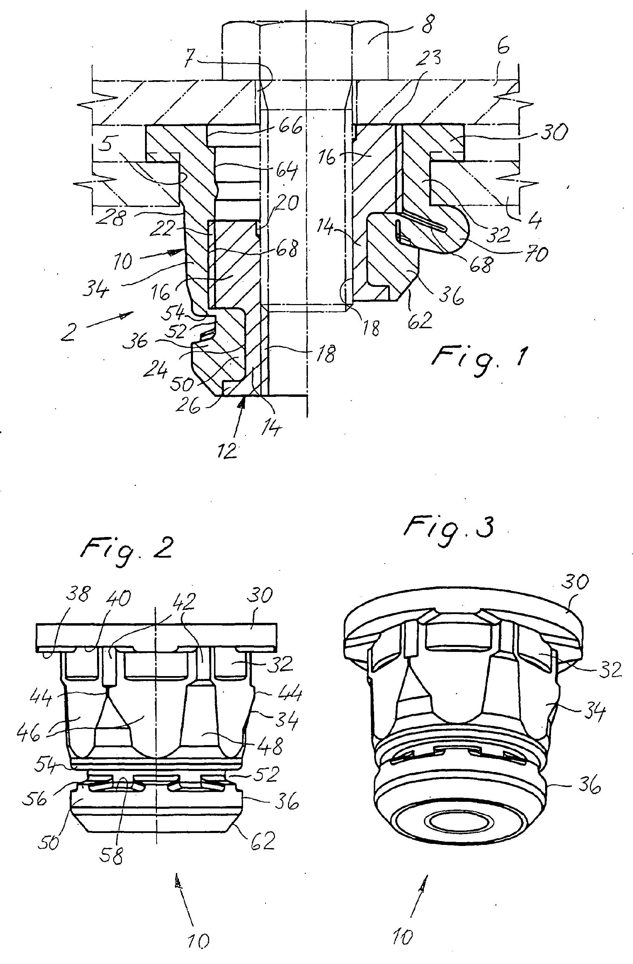

Die in Fig. 1 dargestellte Blindnietmutter 2 ist Teil einer - im übrigen nur strichpunktiert dargestellten - Schraubverbindung zwischen einem plattenförmigen Trägerteil 4 und einem plattenförmigen Befestigungsteil 6 mittels einer in die Blindnietmutter 2 eingeschraubten Befestigungsschraube 8. Das Trägerteil 4, das nur von der Oberseite her zugänglich ist, hat ein Befestigungsloch 5 zur Aufnahme der Blindnietmutter 2, und das Befestigungsteil 6 hat ein Befestigungsloch 7 zum Durchstecken der Befestigungsschraube 8, wie im Folgenden noch genauer erläutert wird.

Die Blindnietmutter 2 besteht aus einem elastischen Außenkörper 10 und einer metallischen Gewindebuchse 12, die in den Außenkörper 10 formschlüssig eingebettet ist.

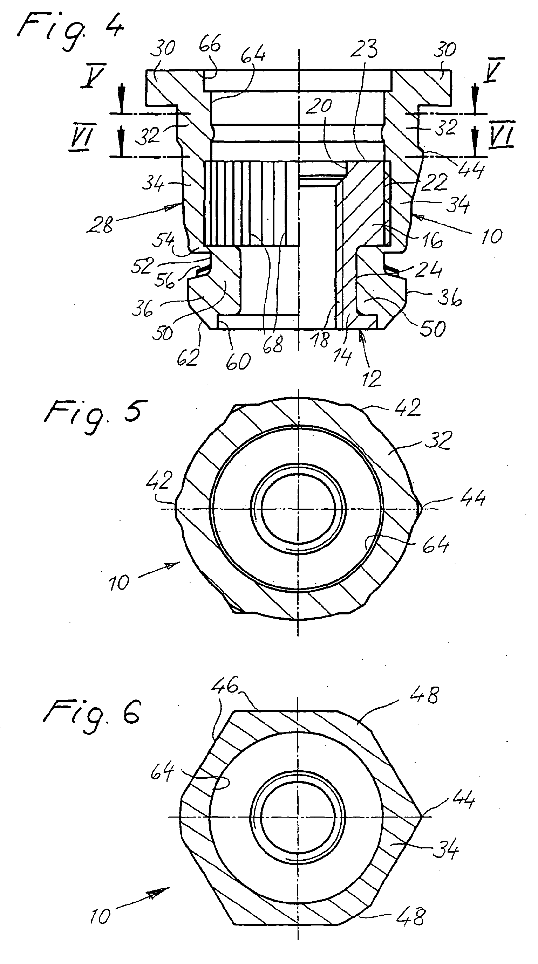

Wie in der rechten Hälfte der Fign. 1 und 4 zu sehen ist, besteht die Gewindebuchse 12 aus einem Verankerungsabschnitt 14 und einem sich axial daran anschließenden Abstützabschnitt 16. Die Gewindebuchse 12 ist ferner mit einem Innengewinde 18 versehen, das sich im wesentlichen über die gesamte Länge der Gewindebuchse 12 erstreckt, wobei die Länge des Innengewindes 18 ungefähr dem Zweifachen des Durchmessers des Innengewindes 18 entspricht. Im Einlaufbereich des Innengewindes 18 ist eine Senkung 20 vorgesehen, um dort Spannungsspitzen zu vermeiden und für eine gleichmäßige Kraftverteilung zu sorgen.

Der allgemein zylindrisch ausgebildete Abstützabschnitt 16 ist an seinem Außenumfang mit Längsrändeln 22 in Form von axial verlaufenden Leisten und Nuten versehen, die mit entsprechenden Längsrändeln des Außenkörpers 10 zusammenwirken, wie noch genauer erläutert wird. Die obere Stirnfläche 23 des Abstützabschnittes 16 ist als Anlagefläche ausgebildet, die ausreichend groß gewählt wird, damit bei ihrer Anlage an der Unterseite des Befestigungsteils 6 eine zulässige Flächenpressung nicht überschritten wird.

Der Verankerungsabschnitt 14 der Gewindebuchse 12 ist mit einem ringförmigen Einstich 24 versehen, dessen radiale Tiefe z. B. größer als die halbe radiale Dicke des Abstützabschnittes 16 ist und dessen axiale Länge z. B. mehr als das Zweifache der radialen Tiefe des Einstiches 24 beträgt. An seinem unteren Ende wird der Einstich 24 von einem ringförmigen Mitnahmeflansch 26 begrenzt, der bei der Montage der Schraubverbindung eine Mitnahmekraft auf den Außenkörper 10 ausübt, wie ebenfalls noch genauer erläutert wird.

Die Gewindebuchse 12 besteht vorzugsweise aus Messing, kann jedoch auch aus einem anderen Material wie beispielsweise aus Stahl oder einer Aluminiumlegierung bestehen.

Der elastische Außenkörper 10 wird durch Umspritzen der Gewindebuchse 12 mit Kunststoff in einem Spritzgießverfahren hergestellt. Wie bereits eingangs erwähnt, ist der Kunststoff vorzugsweise ein Elastomer auf Polyesterbasis, insbesondere Polybutylenteraphthalat (PBT) oder Polyethylenterephthalat (PET). Diese Materialien sind zwar elastisch verformbar, haben jedoch eine relative hohe Shore-Härte (im Shore D-Bereich) sowie eine ausgezeichnete Wärmeformbeständigkeit (150° C und mehr). Darüber hinaus verfügen sie über eine gute Chemikalienbeständigkeit, insbesondere Dieselölbeständigkeit. In Frage kommen auch vernetzte Elastomere wie Gummi/Kautschuk.

Es wird nun der Außenkörper 10 genauer beschrieben, wobei die Ausgestaltung des Außenkörpers 10 zusätzlich zu den Fign. 1 und 4 in den Fign. 2, 3 und 5, 6 im Einzelnen dargestellt ist. Allgemein gesprochen, besteht der Außenkörper 10 aus einem hülsenförmigen Schaft 28, der sich aus einem Befestigungsflansch 30, einem Ringbund 32, einer Faltzone 34 und einem Verankerungsabschnitt 36 zusammensetzt.

Wie insbesondere in den Fign. 2 und 3 zu sehen ist, hat der ringförmige Befestigungsflansch 30 an seiner Unterseite, die in der fertigen Schraubverbindung an der Oberseite des Trägerteils 4 aufliegt, tragende Teile 38 in Form von Vorsprüngen und nicht tragende Teile 40 in Form von Vertiefungen. Die Umfangserstreckung und Höhe der tragenden Teile 38 wird je nach Anwendungsfall so gewählt, dass sich in der fertiggestellten Schraubverbindung eine möglichst optimale Schwingungsentkopplung des Trägerteils 4 ergibt, wie noch genauer erläutert wird.

An den Befestigungsflansch 30 schließt sich der Ringbund 32 an, der in der fertigen Schraubverbindung von dem Befestigungsloch 5 des Trägerteils 4 aufgenommen wird. Der Durchmesser des Ringbundes 32 entspricht praktisch dem Durchmesser des Befestigungsloches 5, und die axiale Höhe des Ringbundes 32 entspricht im wesentlichen der Dicke des Trägerteils 4. Der Ringbund 32 ist mit mehreren über den Umfang verteilten Noppen 42 versehen, die axial verlaufen und radial über den Ringbund 32 nach außen vorstehen, um den Außenkörper 10 unter Klemmwirkung in dem Befestigungsloch 5 des Trägerteils 4 zu halten. Im dargestellten Ausführungsbeispiel sind sechs Noppen 42 vorgesehen, wobei natürlich die Anzahl der Noppen auch anders gewählt werden kann.

Axial angrenzend an den Ringbund 32 sind mehrere über den Umfang verteilte, radial gegenüber dem Ringbund nach außen vorstehende Klemmvorsprünge 44 angeordnet. Im dargestellten Ausführungsbeispiel sind drei Klemmvorsprünge 44 vorgesehen, die jeweils axial fluchtend zu je einem der Noppen 42 verlaufen. Es versteht sich, dass auch in diesem Fall die Anzahl der Klemmvorsprünge anders gewählt werden kann. Die Klemmvorsprünge 44 dienen - zusammen mit den Noppen 42 und dem Befestigungsflansch 30 - dazu, die Blindnietmutter vor und während der Montage verliersicher im Befestigungsloch 5 des Trägerteils 4 zu halten.

Der Außenkörper 10 ist im Bereich der Faltzone 34 allgemein rohrförmig ausgebildet und hat an seiner Oberfläche mehrere (im Ausführungsbeispiel sechs) Abflachungen 46 in Form ebener Flächen, die in ihren in Umfangsrichtung aneinander angrenzenden Bereichen für eine Querschnittsvergrößerung des Schaftes 28 und somit für Längsverstärkungen 48 sorgen. Die Längsverstärkungen 48 sind axial fluchtend zu den Noppen 42 des Ringbundes 32 angeordnet und sorgen für eine erhöhte Verwindungssteifigkeit des Außenkörpers 10 im Bereich der Faltzone 34.

Der sich an die Faltzone 34 anschließende Verankerungsabschnitt 36 des Außenkörpers 10 besteht aus einem radial nach innen ragenden Verankerungsvorsprung 50, der den Einstich 24 der Gewindebuchse 12 vollständig ausfüllt, um eine formschlüssige Verbindung zwischen dem Verankerungsabschnitt 14 der Gewindebuchse 12 und dem Verankerungsabschnitt 36 des Außenkörpers 10 zu bilden.

Im Bereich angrenzend an die Faltzone 34 ist der Verankerungsabschnitt 36 mit einer Ringnut 52 versehen, der für eine Querschnittsverringerung am unteren Ende der Faltzone 34 und somit für eine Sollknickstelle 54 sorgt, welche eine Faltung der Faltzone 34 bei der Montage einleitet, wie noch genauer erläutert wird. An der der Sollknickstelle 54 gegenüberliegenden Seitenwand der Ringnut 52 sind mehrere über den Umfang verteilte Rippen 56 und Vertiefungen 58 vorgesehen. Die Rippen 56 und Vertiefungen 58 verlaufen in radialer Richtung, wobei sich die Rippen 56 von radial innen nach radial außen verjüngen und die Vertiefungen 58 sich entsprechend von radial innen nach radial außen verbreitern.

Trotz der Ringnut 52 hat der Verankerungsabschnitt 36 mit dem Verankerungsvorsprung 50 eine relativ große Materialstärke, wodurch dem Verankerungsabschnitt 36 eine entsprechend große Steifigkeit verliehen wird. An seinem unteren axialen Ende ist der Verankerungsabschnitt 36 mit einer Einsenkung 60 zur Aufnahme des Mitnahmeflansches 26 der Gewindebuchse 12 versehen. Ein Einführkonus 62 an der Außenseite des Verankerungsabschnittes 36 dient als Findehilfe zum Einführen der Blindnietmutter 2 in das Befestigungsloch 5 des Trägerteils 4.

Die Innenbohrung des hülsenförmigen Schaftes 28 des Außenkörpers 10 besteht im oberen Teil aus einem zylindrischen Bohrungsabschnitt 64, der an seinem oberen Ende in eine Senkbohrung 66 vergrößerten Durchmessers übergeht. (Der im Bohrungsabschnitt 64 zu sehende ringförmige Vorsprung entsteht beim Spritzgießvorgang und hat für die Funktion der Blindnietmutter keine Bedeutung.)

An das untere Ende des Bohrungsabschnittes 64 schließt sich ein Bohrungsabschnitt mit Längsrändeln 68 an, die aufgrund des Spritzgießvorganges passend zu den Längsrändeln 22 der Gewindebuchse 12 ausgebildet sind und in diese formschlüssig eingreifen. Der Durchmesser des Bohrungsabschnittes 64 entspricht dem Kerndurchmesser der Längsrändel 22 der Gewindebuchse 12, um mit diesen in noch zu beschreibender Art und Weise zusammenzuwirken.

Es werden nun die Montage der in Fig. 1 gezeigten Schraubverbindung sowie die zugehörige Funktionsweise der Blindnietmutter 2 beschrieben:

Zu Beginn der Montage wird die Blindnietmutter 2 von der Oberseite des Trägerteils 4 aus in das Befestigungsloch 5 eingesteckt, bis der Befestigungsflansch 30 an der Oberseite des Trägerteils 4 anliegt. Das Einführen der Blindnietmutter 2 in das Befestigungsloch 5 wird durch den Einführkonus 62 am unteren Ende des Außenkörpers 10 erleichtert. Die Blindnietmutter 2 wird nun durch die radial verformten Noppen 42 am Ringbund 32 im Befestigungsloch 5 festgeklemmt und durch den Befestigungsflansch 30 einerseits und die Klemmvorsprünge 44 andererseits am Trägerteil 4 verliersicher gehalten, so dass das Trägerteil 4 und die Blindnietmutter 2 als Einheit gehandhabt werden können.

Zur Fortführung der Montage wird das Befestigungsteil 6 an der Oberseite des Befestigungsflansches 30 so angelegt, dass das Befestigungsloch 7 des Befestigungsteils 6 zu dem Innengewinde 18 der Gewindebuchse 12 axial fluchtet. Die Befestigungsschraube 8 kann dann durch das Befestigungsloch 7 hindurch mit dem Innengewinde 18 der Gewindebuchse 12 in Eingriff gebracht werden. Dieser Zustand ist in der linken Hälfte der Fig. 1 dargestellt.

Wenn nun die Schraube 8 in die Gewindebuchse 12 eingeschraubt wird, bewegt dies die Gewindebuchse 12 axial nach oben. Die Gewindebuchse 12 nimmt hierbei über die formschlüssige Verbindung zwischen den Verankerungsabschnitten 36 und 50 den unteren Teil des Außenkörpers 10 nach oben mit, wobei insbesondere der Mitnahmeflansch 26 der Gewindebuchse 12 eine Mitnahmekraft auf den Verankerungsvorsprung 50 des Außenkörpers 10 ausübt.

Aufgrund der axialen Verschiebung der Gewindebuchse 12 und der entsprechenden Mitnahme des Verankerungsabschnittes 36 des Außenkörpers 10 wird der Außenkörper 10 im Bereich der Faltzone 34 zu einem Stauchwulst 70 gefaltet, wie in der rechten Hälfte der Fig. 1 zu sehen ist. Der Faltvorgang wird an der durch die Querschnittsverringerung gebildeten Sollknickstelle 54 eingeleitet und schreitet während der Axialverschiebung der Gewindebuchse 12 kontinuierlich fort. Da hierbei die Schraube 8 aufgrund des Schraubvorganges Dreh- und Torsionskräfte über die Gewindebuchse 12 auf den elastischen Außenkörper 10 überträgt, muss ein Mitdrehen des Außenkörpers 10 und unzulässige Verwindungen des Außenkörpers 10 vermieden werden. Hierzu ist eine Verdrehsicherung des Außenkörpers 10 vorgesehen, die sich aus mehreren Merkmalen zusammensetzt:

Zu Beginn des Faltvorganges wird der Außenkörper 10 der Blindnietmutter 2 durch die Noppen 42 am Ringbund 32 klemmend in dem Befestigungsloch 5 des Trägerteils 4 gehalten, wodurch der Außenkörper 10 an einem Mitdrehen gehindert wird. Gleichzeitig wirken die ineinandergreifenden Längsrändel 22, 68 der Gewindebuchse 12 und des Außenkörpers 10 als Mittel zum Verhindern einer Relativdrehung zwischen der Gewindebuchse 12 und dem Außenkörper 10. Während die Gewindebuchse 12 von der Schraube 8 axial nach oben bewegt wird, kommt es zu einer Längsverschiebung des Abstützabschnittes 16 der Gewindebuchse 12 relativ zu dem am Trägerteil 4 festgelegten oberen Teil des Außenkörpers 10. Hierbei graben sich die Längsrändel 22 der Gewindebuchse 16 in das Material des Außenkörpers 10 im Bereich der Gewindebohrung 64 ein, wodurch die Längsrändel 22 der Gewindebuchse 10 entsprechende Längsrändel in das Material des Außenkörpers 10 schneiden. Hierdurch wird während des gesamten Faltvorganges ein Verdrehen des Außenkörpers 10 relativ zur Gewindebuchse 12 vermieden.

Gleichzeitig tragen die durch die Abflachungen 46 gebildeten Längsverstärkungen 48 im Bereich der Faltzone 34 des Außenkörpers 10 dazu bei, unzulässige Verwindungen des Außenkörpers 10 zu verhindern.

Am Ende des Faltvorganges werden die gegenüberliegenden Abschnitte der Längsrändel 68 des Außenkörpers 10 im Bereich des Stauchwulstes 70 ineinandergedrückt, wodurch eine formschlüssige Verbindung im Bereich des Stauchwulstes 70 entsteht. Gleichzeitig wird die Außenseite des Stauchwulstes 70 mit den Abflachungen 46 und Längsverstärkungen 48 gegen die Rippen 56 und Vertiefungen 58 an der unteren Seitenwand der Ringnut 52 angedrückt, was ebenfalls dazu beiträgt, Verwindungen bzw. Torsionsbewegungen des Außenkörpers 10 im Bereich des Stauchwulstes 70 zu unterbinden. Wie insbesondere in den Fign. 2 und 3 zu sehen ist, sind die Abflachungen 46 zu den Rippen 56 axial ausgerichtet, und die Längsverstärkungen 48 sind zu den Vertiefungen 58 axial ausgerichtet, was sich entsprechend günstig auf die Verdrehsicherung auswirkt. Für eine Optimierung der Verdrehsicherung könnte die Oberseite der Faltzone 34 und die zugehörige Seitenwand der Ringnut 52 hinsichtlich ihrer Profilierung passend zueinander ausgebildet werden, so dass bei der Anlage der Oberseite der Faltzone 34 an der Seitenwand der Ringnut 52 eine formschlüssige Verbindung entsteht. Eine derartige formschlüssige Verbindung ist jedoch nicht unbedingt erforderlich, wie das dargestellte Ausführungsbeispiel zeigt.

Um am Ende des Faltvorganges eine einwandfreie Anlage der Stirnfläche 23 der Gewindebuchse 12 an der Unterseite des Befestigungsteils 6 sicherzustellen, wird das von den Längsrändeln 22 der Gewindebuchse 12 verdrängte Material des Außenkörpers 10 von der Senkbohrung 66 aufgenommen. Aufgrund der beschriebenen Verwindungssteifigkeit und Verdrehsicherung des Außenkörpers 10 kann die Stirnfläche 23 der Gewindebuchse 12 relativ groß gewählt werden, so dass trotz einer relativ großen Anzugskraft die Flächenpressung zwischen der Gewindebuchse 12 und dem Befestigungsteil 6 relativ gering gehalten werden kann.

Beim Falten des Stauchwulstes 70 entsteht im Bereich der Querschnittsverringerung der Sollknickstelle 54 eine radial einwärts gerichtete Kraft, die zusammen mit der relativ großen Wandstärke des Außenkörpers 10 im Bereich des Verankerungsabschnittes 36 ein Aufweiten bzw. "Ausknöpfen" des Außenkörpers 10 verhindert. Gleichzeitig wird an dieser Stelle eine axiale Lastaufnahme, d. h. die Aufnahme einer Axialkraft von dem Außenkörper 10, ermöglicht.

Bei fertiggestellter Schraubverbindung wird die Blindnietmutter 2 an dem Trägerteil 4 einerseits durch den Befestigungsflansch 30 und andererseits durch den Stauchwulst 70 festgelegt, wobei die Ausgestaltung der Anlagefläche des Befestigungsflansches 30 mit tragenden und nicht tragenden Anteilen 38 bzw. 40 einerseits und der frei überstehende, aus einer Restverformung axial nachgiebige Stauchwulst 70 andererseits für optimale schwingungsentkoppelnde Ausgleichsbewegungen des Trägerteils 4 und eine entsprechende Geräuschdämpfung ermöglichen. Die beschriebene und dargestellte Blindnietmutter 2 kann daher beispielsweise vorteilhaft im Kraftfahrzeugbereich eingesetzt werden.

Wie aus der vorstehenden Beschreibung ersichtlich sein dürfte, kann die Blindnietmutter für hochbelastbare Schraubverbindungen mit hochfesten Schrauben, insbesondere der Festigkeitsklasse ≥ 8.8 mit entsprechend hoher Mindestzugfestigkeit und Mindestdehnung, ausgelegt werden. Gleichzeitig zeichnet sich die Blindnietmutter durch optimale mechanische Eigenschaften hinsichtlich Zug- und Scherlast mit extrem guten schwingungsentkoppelnden und geräuschdämpfenden Eigenschaften aus. Die oben beschriebenen Materialien des Außenkörpers erlauben darüber hinaus einen Einsatz in einer Umgebung mit hoher Temperaturlast (bis ca. 150° C und mehr) und Schadstoffbelastung (insbesondere Dieselöl). Da der elastische Außenkörper 10 mit der metallischen Gewindebuchse 12 durch Spritzgießen verbunden wird, ist im übrigen eine relativ einfache Herstellung der Blindnietmutter möglich.

Bei dem beschriebenen und dargestellten Ausführungsbeispiel ist der Blindniet als Blindnietmutter ausgebildet, die eine Buchse in Form einer Gewindebuchse mit Innengewinde aufweist. Es sind jedoch auch Ausführungsformen möglich, bei denen die Buchse ohne Gewinde ausgebildet ist (nicht gezeigt). In diesem Fall wird die Befestigungsschraube vom entgegengesetzten Ende des Blindniets durch die Buchse hindurchgesteckt und mit einem in einem entsprechenden Befestigungsteil vorgesehenen Gewinde (nicht gezeigt) verschraubt. Das Befestigungsteil kann hierbei auch aus einer einfachen Mutter bestehen. Die Buchse hat dann im wesentlichen die Funktion einer Distanzbuchse.

## Patentansprüche

1. Blindniet für eine Schraubverbindung zwischen einem Trägerteil (4) und einem Befestigungsteil (6), bestehend aus
einem elastischen Außenkörper (10) mit einem in ein Befestigungsloch (5) des Trägerteils (4) einsteckbaren hülsenförmigen Schaft (28), der einen Befestigungsflansch (30) und eine zu einem Stauchwulst (70) faltbare Faltzone (34) aufweist, welche auf gegenüberliegenden Seiten des Trägerteils (4) abstützbar sind, und
einer metallischen Buchse (12), die innerhalb des Außenkörpers (10) angeordnet ist,
wobei eine Verdrehsicherung (22, 68; 46, 48; 56, 58) für den elastischen Außenkörper (10) zum Verhindern von Verwindungen des Außenkörpers vorgesehen ist, und die Buchse (12) einen im Bereich der Faltzone (34) angeordneten Abstützabschnitt (16) aufweist, der relativ zum Außenkörper (10) längsverschiebbar ist und eine Stirnseite (23) aufweist, die sich am Ende des Faltvorganges an das Befestigungsteil (6) anlegt, **dadurch gekennzeichnet,**
**dass** der Außenkörper (10) durch Umspritzen der Buchse (12) spritzgegossen ist, dass die Buchse (12) einen sich an ihren Abstützabschnitt (16) anschließenden Verankerungsabschnitt (14) mit einem ringförmigen Einstich (24) hat, der von einem passend ausgebildeten Verankerungsvorsprung (50) des Außenkörpers (10) ausgefüllt ist, um eine formschlüssige Verbindung zwischen der Buchse (12) und dem Außenkörper (10) zu bilden, und dass der ringförmige Einstich (24) der Buchse (12) an dem vom Abstützabschnitt (16) abgewandten axialen Ende von einem Mitnahmeflansch (26) begrenzt wird, der beim Faltvorgang eine axiale Mitnahmekraft von der Buchse (12) auf den Außenkörper (10) überträgt.

2. Blindniet nach Anspruch 1, **dadurch gekennzeichnet, dass** die Verdrehsicherung ineinander greifende Längsrändel (22, 68) des Außenkörpers (10) und der Buchse (12) im Bereich der Faltzone (34) aufweist.

3. Blindniet nach Anspruch 2, **dadurch gekennzeichnet, dass** der Innendurchmesser des Außenkörpers (10) in einem Bereich angrenzend an die Faltzone (34) so bemessen ist, dass sich die Längsrändel (22) der Buchse (12) bei einer Längsverschiebung des Abstützabschnittes (16) in das Material des Außenkörpers (10) eingraben.

4. Blindniet nach Anspruch 3, **dadurch gekennzeichnet, dass** der Außenkörper (10) eine Senkbohrung (66) zur Aufnahme von Material hat, das die Längsrändel (22) der Buchse (12) beim Eingraben in das Material des Au-ßenkörpers (10) verdrängen.

5. Blindniet nach einem der Ansprüche 2 bis 4, **dadurch gekennzeichnet, dass** sich die Längsrändel (68) des Außenkörpers (10) im wesentlichen über die gesamte Länge der Faltzone (34) erstrecken, so dass beim Falten des Stauchwulstes (70) die im Inneren des Stauchwulstes (70) gegenüberliegenden Längsrändel (68) des Außenkörpers (10) ineinandergedrückt werden.

6. Blindniet nach einem der vorhergehenden Ansprüche, **dadurch gekennzeichnet, dass** die Verdrehsicherung ferner Längsverstärkungen (48) des Außenkörpers (10) aufweist, die durch Abflachungen (46) an der Außenseite des Schaftes (28) des Außenkörpers (10) im Bereich der Faltzone (34) gebildet sind.

7. Blindniet nach einem der vorhergehenden Ansprüche, **dadurch gekennzeichnet, dass** der Schaft (28) des Außenkörpers (10) angrenzend an der Faltzone (34) eine Ringnut (52) hat, die durch eine Wandstärkenverringerung am Ende der Faltzone (34) eine Sollknickstelle (54) zum Falten des Stauchwulstes (70) bildet.

8. Blindniet nach Anspruch 7, **dadurch gekennzeichnet, dass** die Verdrehsicherung ferner radial verlaufende Rippen (56) und Vertiefungen (58) an der der Stollknickstelle (54) gegenüberliegenden Seitenwand der Ringnut (52) aufweist, gegen welche der Stauchwulst (70) beim Faltvorgang angedrückt wird.

9. Blindniet nach den Ansprüchen 6 und 8, **dadurch gekennzeichnet, dass** die Abflachungen (46) an der Außenseite des Schaftes (28) des Außenkörpers (10) mit den von ihnen gebildeten Längsverstärkungen (48) beim Faltvorgang gegen die Rippen (56) und Vertiefungen (58) an der Seitenwand der Ringnut (52) andrückbar sind.

10. Blindniet nach einem der vorhergehenden Ansprüche, **dadurch gekennzeichnet, dass** der Außenkörper (10) im Bereich zwischen dem Befestigungsflansch (30) und der Faltzone (34) einen Ringbund (32) hat, dessen axiale Abmessung im Gebrauch im wesentlichen der Dicke des Trägerteils (4) entspricht und dessen Außendurchmesser im wesentlichen dem Innendurchmesser des Befestigungsloches (5) des Trägerteils (4) entspricht.

11. Blindniet nach Anspruch 10, **dadurch gekennzeichnet, dass** am Ringbund (32) des Außenkörpers (10) über den Umfang verteilte Noppen (42) zum Festklemmen des Außenkörpers (10) im Befestigungsloch (5) des Trägerteils (4) vorgesehen sind.

12. Blindniet nach Anspruch 10 oder 11, **dadurch gekennzeichnet, dass** der Außenkörper (10) im Bereich zwischen der Faltzone (34) und dem Ringbund (32) mit über den Umfang verteilten Klemmvorsprüngen (44) versehen ist, die zusammen mit dem Befestigungsflansch (30) den Blindniet vor dem Faltvorgang an dem Trägerteil (4) sichern.

13. Blindniet nach einem der vorhergehenden Ansprüche, **dadurch gekennzeichnet, dass** der Befestigungsflansch (30) an seiner am Trägerteil (4) abstützbaren Auflagefläche tragende und nicht tragende Anteile (38, 40) zwecks Schwingungsentkopplung hat.

14. Blindniet nach einem der vorhergehenden Ansprüche, **dadurch gekennzeichnet, dass** die Buchse (12) als Gewindebuchse mit einem Innengewinde (18) zur Aufnahme einer Befestigungsschraube (8) ausgebildet ist, so dass der Blindniet als Blindnietmutter dient.

15. Blindniet nach Anspruch 14, **dadurch gekennzeichnet, dass** sich das Innengewinde (18) der Gewindebuchse (12), abgesehen von einer Senkung (20) im Einlaufbereich, über die gesamte axiale Länge der Gewindebuchse (12) erstreckt und einen Länge hat, die ungefähr das zweifache des Durchmessers des Innengewindes (18) der Gewindebuchse (12) beträgt.

16. Blindniet nach einem der Ansprüche 1 bis 13, **dadurch gekennzeichnet, dass** die Buchse gewindefrei ausgebildet ist.

17. Blindniet nach einem der vorhergehenden Ansprüche, **dadurch gekennzeichnet, dass** der Außenkörper (10) aus einem thermoplastischen Elastomer auf Polyesterbasis oder einem vernetzten Elastomer mit guter Chemikalienbeständigkeit und Wärmeformbeständigkeit besteht.

18. Blindniet nach Anspruch 17, **dadurch gekennzeichnet, dass** das Elastomer auf Polyesterbasis ein Polybutylenterephthalat (PBT) oder Polyethylenterephthalat (PET) ist.

## Claims

1. Blind rivet for a threaded joint between a support member (4) and a mounting member (6), consisting of
an elastic external body (10) with a sleeve-shaped shank (28) adapted to be inserted into a mounting hole (5) of the support member (4), the shank comprising a mounting flange (30) and a folding zone (34) adapted to be folded into a fold (70), the mounting flange and folding zone being adapted to be supported on opposite sides of said support member (4), and
a metallic sleeve (12) disposed within the external body (10),
rotation preventing means (22, 68; 46, 48; 56, 58) for the elastic external body (10) being provided for preventing twisting deformations of the external body (10), and the sleeve (12) comprising, in the folding zone (34), a support portion (16) which is longitudinally displaceable with respect to the external body (10) and has an end face (23) engaging the mounting member (6) at the end of the folding operation, **characterized in that**
the external body (10) is injection-molded by injection molding of material about the sleeve (12),
the sleeve (12) has an anchoring portion (14) following the support portion (16) and provided with an annular recess (24) receiving a matingly shaped anchoring projection (50) of the external body (10) so as to provide for a positively interlocking connection between the sleeve (12) and the external body (10), and
the annular recess (24) of the sleeve (12), at the end remote from the supporting portion (16), is limited by a drive flange (26) adapted to transmit an axial drive force from the sleeve (12) to the external body (10).

2. Blind rivet according to claim 1, **characterized in that** the rotation preventing means comprise inter-engaging longitudinal knurls (22, 68) of the external body (10) and the sleeve (12) in the area of the folding zone (34).

3. Blind rivet according to claim 2, **characterized in that** the internal diameter of the external body (10), in an area adjacent to the folding zone (34), is dimensioned such that the longitudinal knurls (22) of the sleeve (12) dig into material of the external body (10) when the support portion (16) is longitudinally displaced.

4. Blind rivet according to claim 3, **characterized in that** the external body has a recess (66) for receiving material which is displaced by the longitudinal knurls (22) of the sleeve (12) when they dig into the material of the external body (10).

5. Blind rivet according to any of claims 2 to 4, **characterized in that** the longitudinal knurls (68) of the external body (10) extend along substantially the entire length of the folding zone (34) such that the longitudinal knurls of the external body (70) opposing each other within the fold (70) are urged into engagement with each other during the folding operation.

6. Blind rivet according to any of the preceding claims, **characterized in that** the rotation preventing means further comprise strengthening means (48) of the external body (10) which are formed by flattened surfaces (46) on the outside of the shank (28) of the external body (10) in the area of the folding zone (34).

7. Blind rivet according to any of the preceding claims, **characterized in that** the shank (28) of the external body (10), adjacent to the folding zone (34), has an annular groove (52) providing a wall thickness reduction at an end of the folding zone (34) to define a desired buckling area (54) for folding the fold (70).

8. Blind rivet according to claim 7, **characterized in that** the rotation preventing means further comprise radially extending ribs (56) and depressions (58) at the side wall of the annular groove (52) opposite to the desired buckling area (54), against which the fold (70) is urged during the folding operation.

9. Blind rivet according to claims 6 and 8, **characterized in that** the flattened surfaces (46) at the outside of the shank (28) of the external body (10) along with the strengthening means (48) provided thereby are adapted to be urged against the rib (56) and depressions (58) on the sidewall of the annular groove (52) during the folding operation.

10. Blind rivet according to any of the preceding claims, **characterized in that** the external body (10), in an area between the mounting flange (30) and the folding zone (34), has an annular web (32), the axial dimension of which is substantially similar to thickness of the support member (4) and the outer diameter of which is substantially similar to the internal diameter of the mounting hole (5) of the support member (4).

11. Blind rivet as defined in claim 10, **characterized in that** the annular web (32) of the external body (10) has a plurality of circumferentially spaced nubs (42) for clampingly retaining the external body (10) within the mounting hole (5) of the support member (4).

12. Blind rivet according to claim 10 or 11, **characterized in that** the external body (10), in the area between the folding zone (34) and the annular web (32), is provided with a plurality of circumferentially spaced clamping projections (44) which along with the mounting flange (30) retain the blind rivet on the support member (4) before the folding operation.

13. Blind rivet according to any of the preceding claims, **characterized in that** the mounting flange (30), on its support surface engageable with the support member, has engaging and non-engaging portions (38, 40) for vibration dampening purposes.

14. Blind rivet according to any of the preceding claims, **characterized in that** the sleeve (12) is a threaded sleeve having internal threads (18) for receiving a mounting bolt (8) so that the blind rivet serves as a blind rivet nut.

15. Blind rivet as defined in claim 14, **characterized in that** the internal threads (18) of the threaded sleeve (12) extend along the entire axial length of the threaded sleeve (12) except for a reduced diameter portion in an entrance area, and are of a length which is substantially twice the diameter of the internal threads (18) of the threaded sleeve (12).

16. Blind rivet according to any of claims 1 to 13, **characterized in that** the sleeve is formed without threads.

17. Blind rivet according to any of the preceding claims, **characterized in that** the external body (10) is made of a thermoplastic elastomeric material on a polyester base or of a chemically and heat resistant cross-linked elastomeric material.

18. Blind rivet according to claim 17, **characterized in that** the elastomeric material on a polyester base is a polybutylenterephthalate (PBT) or polyethylenterephthalate (PET).

## Revendications

1. Rivet aveugle pour un assemblage vissé entre une partie de support (4) et une partie de fixation (6), composé de
un corps extérieur (10) élastique avec une tige (28), en forme de douille et enfichable dans un trou de fixation (5) de la partie de support (4), qui présente une bride de fixation (30) et une zone de pliage (34), pliable en un bourrelet (70), qui peuvent s'appuyer sur des côtés opposés de la partie de support (4), et
une douille (12) métallique qui est disposée à l'intérieur du corps extérieur (10),
un blocage antitorsion (22, 68 ; 46, 48 ; 56, 58) étant prévu pour le corps extérieur (10) élastique pour empêcher des torsions du corps extérieur, et la douille (12) présentant un segment d'appui (16), disposé dans le secteur de la zone de pliage (34), qui est mobile dans le sens longitudinal par rapport au corps extérieur (10) et présente un côté frontal (23) qui, à la fin du processus de pliage, appuie contre la partie de fixation (6),
**caractérisé en ce que**
le corps extérieur (10) est moulé par injection par enrobage de la douille (12), **en ce que** la douille (12) a un segment d'ancrage (14), se raccordant à son segment d'appui (16), avec une gorge (24) annulaire qui est remplie par une saillie d'ancrage (50) du corps extérieur (10) constituée de façon adaptée, afin de former un raccordement par engagement positif entre la douille (12) et le corps extérieur (10), et **en ce que** la gorge (24) annulaire de la douille (12) est limitée, sur l'extrémité axiale éloignée du segment d'appui (16), par une bride d'entraînement (26) qui transmet, lors du processus de pliage, une force d'entraînement axiale depuis la douille (12) vers le corps extérieur (10).

2. Rivet aveugle selon la revendication 1, **caractérisé en ce que** le blocage antitorsion présente des molettes longitudinales (22, 68), engrenant les unes dans les autres, du corps extérieur (10) et de la douille (12) dans le secteur de la zone de pliage (34).

3. Rivet aveugle selon la revendication 2, **caractérisé en ce que** le diamètre intérieur du corps extérieur (10) est dimensionné, dans le secteur jouxtant la zone de pliage (34), de sorte que les molettes longitudinales (22) de la douille (12), lors d'un déplacement longitudinal du segment d'appui (16), s'enfoncent dans le matériau du corps extérieur (10).

4. Rivet aveugle selon la revendication 3, **caractérisé en ce que** le corps extérieur (10) a un alésage fraisé (66) pour recevoir du matériau que les molettes longitudinales (22) de la douille (12) refoulent lors de l'enfoncement dans le matériau du corps extérieur (10).

5. Rivet aveugle selon une des revendications 2 à 4, **caractérisé en ce que** les molettes longitudinales (68) du corps extérieur (10) s'étendent essentiellement sur toute la longueur de la zone de pliage (34) de sorte que, lors du pliage du bourrelet (70), les molettes longitudinales (68) du corps extérieur (10), opposées à l'intérieur du bourrelet (70), sont pressées les unes dans les autres.

6. Rivet aveugle selon une des revendications précédentes, **caractérisé en ce que** le blocage antitorsion présente également des renforts longitudinaux (48) du corps extérieur (10) qui sont formés par des méplats (46) sur le côté extérieur de la tige (28) du corps extérieur (10) dans le secteur de la zone de pliage (34).

7. Rivet aveugle selon une des revendications précédentes, **caractérisé en ce que** la tige (28) du corps extérieur (10), de façon limitrophe à la zone de pliage (34), a une rainure annulaire (52) qui forme, par une réduction de l'épaisseur de paroi à l'extrémité de la zone de pliage (34), un emplacement destiné au flambage (54) pour le pliage du bourrelet (70).

8. Rivet aveugle selon la revendication 7, **caractérisé en ce que** le blocage antitorsion présente également des nervures (56) et des creux (58), disposés dans le sens radial, sur la paroi latérale de la rainure annulaire (52) opposée à l'emplacement destiné au flambage (54) et contre lesquels le bourrelet (70) est pressé lors du processus de pliage.

9. Rivet aveugle selon les revendications 6 et 8, **caractérisé en ce que** les méplats (46) sur le corps extérieur de la tige (28) du corps extérieur (10) peuvent, avec les renforts longitudinaux (48) formés par eux, lors du processus de pliage, être pressés contre les nervures (56) et les creux (58) sur la paroi latérale de la rainure annulaire (52).

10. Rivet aveugle selon une des revendications précédentes, **caractérisé en ce que** le corps extérieur (10), dans le secteur entre la bride de fixation (30) et la zone de pliage (34), a un collet annulaire (32) dont la dimension axiale pendant l'utilisation correspond essentiellement à l'épaisseur de la partie de support (4), et dont le diamètre extérieur correspond essentiellement au diamètre intérieur du trou de fixation (5) de la partie de support (4).

11. Rivet aveugle selon la revendication 10, **caractérisé en ce que**, sur le collet annulaire (32) du corps extérieur (10), il est prévu des boutons (42) répartis sur la circonférence pour le blocage du corps extérieur (10) dans le trou de fixation (5) de la partie de support (4).

12. Rivet aveugle selon la revendication 10 ou 11, **caractérisé en ce que** le corps extérieur (10), dans le secteur entre la zone de pliage (34) et le collet annulaire (32), est muni de saillies de blocage (44) réparties sur la circonférence qui, avec la bride de fixation (30), bloquent le rivet aveugle avant le processus de pliage sur la partie de support (4).

13. Rivet aveugle selon une des revendications précédentes, **caractérisé en ce que** la bride de fixation (30), sur sa surface d'appui pouvant s'appuyer sur la partie de support (4), a des fractions porteuses et des fractions non porteuses (38, 40) en vue d'un découplage des vibrations.

14. Rivet aveugle selon une des revendications précédentes, **caractérisé en ce que** la douille (12) est constituée en tant que douille filetée avec un filet intérieur (18) pour recevoir une vis de fixation (8) de sorte que le rivet aveugle sert d'écrou de rivet aveugle.

15. Rivet aveugle selon la revendication 14, **caractérisé en ce que** le filet intérieur (18) de la douille filetée (12), à part une fraisure (20) dans le secteur d'entrée, s'étend sur toute la longueur axiale de la douille filetée (12) et a une longueur qui est à peu près le double du diamètre du filet intérieur (18) de la douille filetée (12).

16. Rivet aveugle selon une des revendications 1 à 13, **caractérisé en ce que** la douille est constituée dépourvue de filet.

17. Rivet aveugle selon une des revendications précédentes, **caractérisé en ce que** le corps extérieur (10) se compose d'un élastomère thermoplastique à base de polyester ou d'un élastomère réticulé ayant une bonne résistance aux produits chimiques et une bonne stabilité dimensionnelle à la chaleur.

18. Rivet aveugle selon la revendication 17, **caractérisé en ce que** l'élastomère à base de polyester est un polytéréphtalate de butylène (PBT) ou un polytéréphtalate d'éthylène (PET).
